# EUROPÄISCHE PATENTSCHRIFT

(11) **EP 1 928 710 B1**
(45) Veröffentlichungstag und Bekanntmachung des Hinweises auf die Patenterteilung: **05.08.2015**
(21) Anmeldenummer: 06792194.0
(22) Anmeldetag: 21.09.2006
(51) Int. Cl.: B60R 25/20, B60R 25/24

(54) **FERNSTEUERBARE SCHLIESSVORRICHTUNG FÜR EIN FAHRZEUG**
REMOTE CONTROLLABLE LOCKING DEVICE FOR A VEHICLE
DISPOSITIF DE FERMETURE TELECOMMANDE POUR VEHICULE

(30) Priorität: 27.09.2005 DE 202005015165 U
(43) Veröffentlichungstag der Anmeldung: 11.06.2008
(73) Patentinhaber: Huf Hülsbeck & Fürst GmbH & Co. KG, 42551 Velbert (DE)
(72) Erfinder: MÜLLER, Ulrich, 42549 Velbert (DE)
(74) Vertreter: Eggers, Thomas Peter
(86) Internationale Anmeldenummer: PCT/EP2006/009171
(87) Internationale Veröffentlichungsnummer: WO 2007/036321

(56) Entgegenhaltungen:
- EP-A2- 1 263 191
- EP-A2- 1 361 324
- WO-A1-2006/112274
- DE-A1- 10 112 027
- DE-A1- 10 142 967
- DE-A1- 10 339 293
- GB-A- 2 240 418
- GB-A- 2 407 230
- US-A1- 2003 117 261
- US-A1- 2005 030 151

## Beschreibung

Es sind Schließvorrichtungen für Fahrzeuge bekannt, bei denen die an den Türen und Klappen des Fahrzeugs befindlichen Schlösser bereits auf Entfernung mittels eines sogenannten "elektronischen Schlüssels" verriegelt oder entriegelt werden können. Die Fernsteuerung erfolgt durch codierte elektromagnetische Signale zwischen Sendern und Empfängern im Fahrzeug einerseits und im Schlüssel andererseits. Das kann monodirektional oder bidirektional erfolgen.

Aus der DE 41 02 020 A1 ist eine Schließvorrichtung der im Oberbegriff des Anspruches 1 angegebenen Art bekannt. Dort besitzt der Schlüssel bereits ein Display zur Anzeige von aktuellen Daten der Schließ- und/oder Betriebszustände des Fahrzeugs. Die Kommunikation zur Identifikation des Codes geht über einen Hauptsender am Schlüssel und einen Hauptempfänger am Fahrzeug. Daneben gibt es aber noch einen Hilfssender im Fahrzeug und einen Hilfsempfänger im Schlüssel, welche die Daten im Fahrzeug erfassen und in einer Anzeige des Schlüssels optisch ablesbar machen. Dafür sind im Schlüssel diverse Funktionstasten vorgesehen, die mit einer im Schlüssel vorgesehenen Zentraleinheit zusammenwirken, um die jeweiligen gewünschten Daten abzurufen.

Aus dem Stand der Technik ist die DE10142967A1 bekannt, welche einen PDA offenbart, der im Rahmen eines passiven Zugangssystems bei Kraftfahrzeugen verwendet wird. Weiter ist aus dem nachveröffentlichten Stand der Technik die WO2006/112274A1 bekannt, welche einen PDA zum Öffnen der Türen beschreibt.

Um mehrere Daten gleichzeitig ablesbar zu machen, muss das Display im Schlüssel groß ausgebildet werden. Auch die Anzahl der Tasten im Tastenfeld des Schlüssels steigt mit der Anzahl der Funktionen, die angezeigt werden sollen. Dies widerspricht dem allgemeinen Ziel, den elektronischen Schlüssel möglichst klein auszubilden, damit er ungestört in Hosen- oder Jackentaschen getragen werden kann.

Der Erfindung liegt die Aufgabe zugrunde, eine Schließvorrichtung zu entwickeln, bei der trotz seiner vielfältigen Anzeigenmöglichkeit der Schlüssel kleine Dimensionen aufweist. Dies wird erfindungsgemäß durch die im Anspruch 1 angegebenen Maßnahmen erreicht, denen folgende besondere Bedeutung zukommt.

Die Erfindung schlägt vor, sowohl das Display als auch die Tastatur am gleichen Ort im Schlüssel zu lokalisieren. Dies ist möglich, weil man einen sogenannten "Tastbildschirm" in den Schlüssel integrierte der nicht nur anzeigewirksam ist, sondern dessen Bildfläche zugleich als Tastatur zum Abruf von Daten und/oder zur Steuerung von Schließ- und/oder Betriebszuständen im Fahrzeug genutzt werden kann. Ein solcher Tastbildschirm wird auch "Sensorbildschirm" genannt oder mit der englischen Bezeichnung "Touch Screen" versehen.

Solche Touch Screens sind an sich bekannt und werden bei Handys, Smartphones, Industrie-PC's, bei Infoterminals im Home-Entertainment oder in Büro-Kopiergeräten eingesetzt. Ein wichtiges Anwendungsfeld von Touch Screens sind auch Terminals in Kreditinstituten, z.B. für Überweisungen oder Geldautomaten. Es hat aber nicht nahe gelegen, diese bekannten Touch Screens auch auf elektronische Schlüssel und zugehörige Schließvorrichtungen in Fahrzeugen anzuwenden.

Bei dem erfindungsgemäßen Schlüssel ist es möglich, in Abhängigkeit von der Tastbetätigung des Bildschirms, die aktuellen Betriebszustände einzelner Fahrzeugteile oder weiterer im Fahrzeug integrierter Geräte ablesbar zu machen und bedarfsweise auch umgekehrt, vom Schlüssel aus, zu steuern. Das kann praktisch alle Elemente und Daten im Fahrzeug betreffen.

Solche anzuzeigenden und/oder zu steuernden Betriebszustände könnten, außer den Schlössern an Türen oder Klappen des Fahrzeugs auch eine Standheizung im Fahrzeug, die Klimaanlage im Fahrzeug, der Füllstand im Tank des Fahrzeugs, der Ladezustand der Batterien, der aktuelle Kilometerstand, ein bei der gegebenen Tankfüllung noch möglicher Fahrweg des Fahrzeugs od. dgl. sein.

Darüber hinaus können aber auch allgemeine Daten angezeigt und abgefragt werden, wie ein über eine Navigation zu ermittelnder aktueller Standort des Fahrzeugs, die Temperatur im Fahrzeuginneren und/oder in der Umgebung, die Temperatur einzelner Geräte im Fahrzeug, die Uhrzeit oder das Datum der nächsten Inspektion des Fahrzeugs.

Der Bildschirm im Touch Screen des Schlüssels ermöglicht ferner, beim Start des Fahrzeugs eine Nummerntastatur dem Fahrzeugbenutzer anzubieten, damit dieser durch Eingabe einer sogenannten PIN-Nummer seine Berechtigung zur Benutzung des Fahrzeugs und/oder zum Abruf der Daten vom Fahrzeug nachweisen kann. Das erfolgt dann in Anlehnung an den Nachweis der Berechtigung zur Benutzung eines Handys.

Der Schlüssel kann aber auch Bestandteil eines Alarmsystems sein, um als Alarmgeber einen Diebstahl des Fahrzeugs oder einen Einbruch in das Fahrzeug zu ermitteln und dem Schlüsselbesitzer kundbar zu machen. Der Schlüssel kann über den Touch Screen aber auch für Staumeldungen bei Benutzungen eines Fahrzeugs-Navigationssystems dienen, nachdem vorausgehend das gewünschte Fahrtziel einprogrammiert worden ist. In Verbindung mit der Uhrzeitanzeige wird der Schlüssel aber auch zu einem Wecker, um den Schlüsselinhaber an bestimmte Termine zu erinnern.

Im Ruhefall wird man den Tastbildschirm und die zugehörige Elektronik im Schlüssel abschalten oder in einem "Schlafzustand" (sleep mode) halten, um die Energiequelle im Schlüssel zu schonen. Die Inbetriebnahme des Tastbildschirms und der zugehörigen Elektronik kann automatisch durch Inbetriebnahme des Schlüssels erfolgen. Das Einschalten kann aber auch durch Betätigen eines, am Schlüssel vorgesehenen Ein- und Ausschalters erfolgen. Letzteres empfiehlt sich im Zusammenhang mit der vorerwähnten PIN-Nummer zu kombinieren.

Damit der Tastbildschirm beim Tragen in Taschen der Kleidung nicht durch andere Gegenstände beschädigt wird, empfiehlt es sich schließlich, den Touch Screen im Ruhefall abzudecken. Das kann durch eine Drehklappe, einen Schiebedeckel oder einen Überzug geschehen.

In den Zeichnungen ist die Erfindung zwar in einem Ausführungsbeispiel, aber in unterschiedlichen Betriebs-Modi für verschiedene Tastbetätigungen gezeigt. Es zeigen:
- Fig. 1,: schematisch, eine erste Phase bei Benutzung eines zu einem Fahrzeug gehörenden elektronischen Schlüssels, der mit einem Touch Screen versehen ist,
- Fig. 2: den Schlüssel von Fig. 1, nachdem auf dem Touch Screen eine erste Rückmeldung vom Fahrzeug angefallen ist und
- Fig. 3: den gleichen elektrischen Schlüssel, um weitere Funktionen im Fahrzeug oder um das Fahrzeug herum anzuzeigen oder zu steuern.

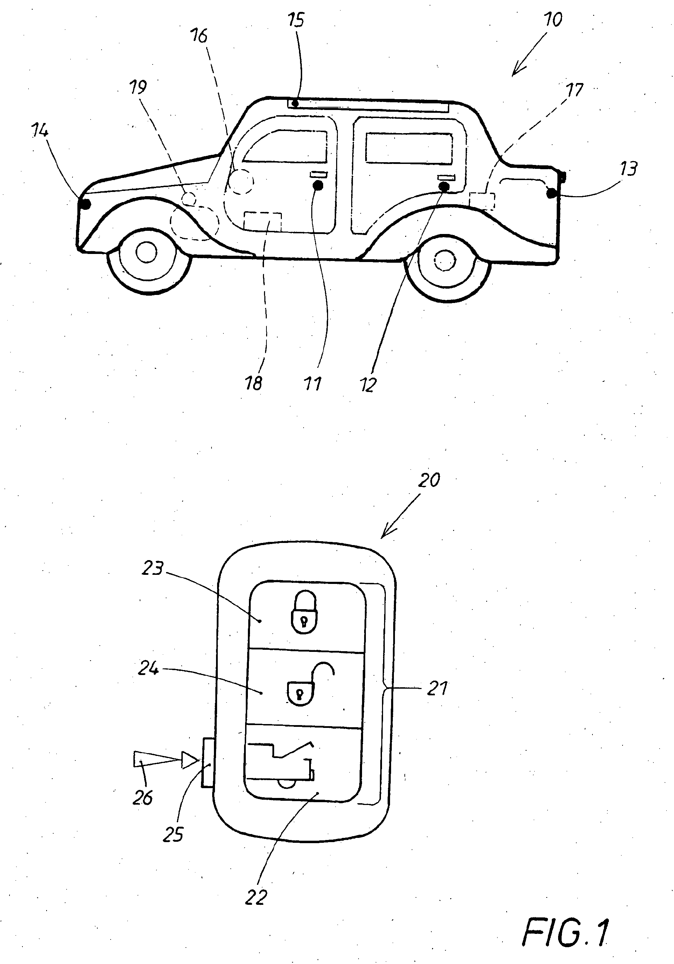

In Fig. 1 ist ein Fahrzeug schematisch zusammen mit jenen Einrichtungen gezeigt, die mit dem in Fig. 1 ebenfalls gezeigten elektronischen Schlüssel 20 durch Fernsteuerung kommunizieren können und fallweise auch Befehle vom Schlüssel 20 entgegennehmen können. Dazu ist der Schlüssel 20 in besonderer Weise ausgebildet.

Der Schlüssel 20 beinhaltet einen Tastbildschirm 21, dessen sichtbare Bildfläche zugleich als Tastatur fungiert, die stellenweise, z.B. im dargestellten Ausführungsbeispiel bei 22 bis 24, betätigt werden kann, um entsprechende Steuerbefehle an das Fahrzeug 10 abzugeben.

Das Fahrzeug 10 ist mit verschiedenen Einrichtungen versehen, von denen in Fig. 1 neun Beispiele 11 bis 19 gezeigt sind. Im dargestellten Ausführungsbeispiel gibt es Schlösser 11, 12 an den Türen und ein weiteres Heckschloss 13 im Kofferraumbereich. Außerdem können Schließeinrichtungen 14, 15 für die Motorhaube oder das Fahrzeugdach hinzukommen. Schließlich umfasst das Fahrzeug 10 eine Fülle von weiteren Geräten, von denen als Beispiel ein Kilometerzähler 16, eine Bordbatterie 17, eine Diebstahlsicherungseinrichtung 18 und ein Tankfüllungsmesser 19 dargestellt sind. Es versteht sich, dass zahlreiche weitere Geräte und Einrichtungen vorgesehen sein könnten, die durch Fernsteuerung am Schlüssel 20 über den aktuellen Betriebszustand angefragt und bedarfsweise umgesteuert werden können.

Im vorliegenden Fall besitzt der Schlüssel 20 einen Ein-/Ausschalter 25, der durch Druckbetätigung 26 den Schlüssel 20 wirksam setzt. Weitere Möglichkeiten dazu sind bereits in den Ansprüchen genannt worden. Im Ausführungsbeispiel von Fig. 1 gibt es eine Modustaste 22 am Bildschirm 21, die bei Betätigung in wechselnder Reihenfolge den jeweiligen Betriebsmodus anzeigt. Im dargestellten Ausführungsbeispiel von Fig. 1 wird alphanumerisch oder bildlich die Funktionsbereitschaft des Schlüssels im Hinblick auf die Heckklappe des Fahrzeugs 10 angezeigt. Zugleich kann an den anderen Tastbetätigungsstellen 23 oder 24 der aktuelle Schließzustand der Heckklappe angezeigt werden. Das kann durch entsprechend unterschiedliche helligkeitsmäßige und/oder farbliche symbolische Darstellungen kundbar gemacht werden. Es erfolgt z.B. die Rückmeldung im Feld 24, dass die Heckklappe offen ist. Der Benutzer kann dann auch gleich auf diese Anzeige 24 im Display reagieren und über das benachbarte Tastbetätigungsfeld 23 das Heckschloss 23 verriegeln bzw. einen Schließmechanismus zum Zuklappen der Heckklappe in Betrieb setzen.

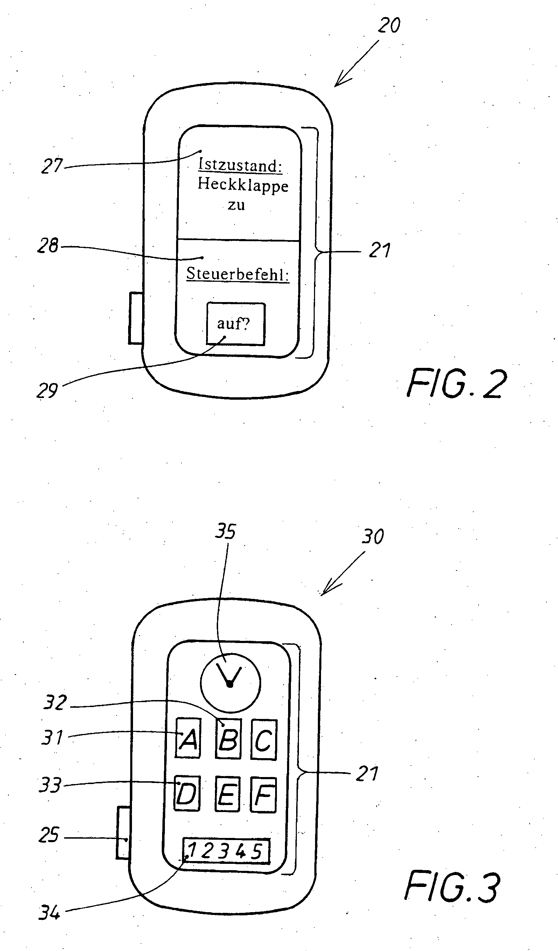

In Fig. 2 ist ein gegenüber Fig. 1 alternativer Fall dargestellt, der sich auch auf die "Heckklappe" richtet. Hier wird jetzt in einem, gegebenenfalls größeren Feld 27 der aktuelle Betriebszustand des vorausgehend durch die Betätigung des Bildschirms 21 angesprochenen Teils des Fahrzeugs vom Benutzer ausgewählten Bauteils angezeigt, nämlich wieder die "Heckklappe". Wenn der berechtigte Benutzer mit dem im Anzeigefeld 27 gemeldeten Betriebszustand nicht einverstanden ist, kann er das benachbarte Feld des Bildschirms 21, das jetzt als Tastatur fungiert, an einer entsprechend markierten Stelle 29 betätigen und dabei den dort angekündigten Steuerbefehl "Öffnen der Heckklappe" veranlassen.

Fig. 3 zeigt den gleichen bzw. einen alternativen Schlüssel 30, bei dem der entsprechende Tastbildschirm 21 außer einer Anzeige der jeweils aktuellen Verhältnisse im Fahrzeug auch nach Anwahl eines bestimmten Modus verschiedene Taststellen 31 bis 33 anbietet, um die jeweiligen Verhältnisse zu verändern. Das ist in Fig. 3 mit graphischen Symbolen A bis F verdeutlicht. Es gibt ferner ein Anzeigenfeld 34, wo beispielsweise numerisch der aktuelle Kilometerstand des Fahrzeugs 10 im Schlüssel 30 angegeben wird. Im Tastbildschirm 21 erscheint dann auch eine Uhranzeige 35. Diese kann dann nach Auswahl eines gewünschten Modus auf eine Weckzeit eingestellt werden. Nach Ablauf der Weckzeit können vom Schlüssel 30 auch selbsttätig, automatisch, Steuerbefehle an das Fahrzeug 10 weitergegeben werden, um dort entsprechende Funktionen auszulösen, z.B. die Einschaltung einer Standheizung im Fahrzeug.

Die Vielzahl der weiteren Möglichkeiten ist bereits vorausgehend in der Beschreibung dargelegt worden.

### Bezugszeichenliste :

- 10: Fahrzeug
- 11: erstes Türschloss
- 12: zweites Türschloss
- 13: Heckschloss von 10
- 14: Schließeinrichtung für Motorhaube
- 15: Schließeinrichtung für Fahrzeugdach
- 16: erstes Gerät für 10, Kilometerzähler
- 17: zweites Gerät für 10, Bordbatterie
- 18: drittes Gerät von 10, Diebstahlsicherungseinrichtung
- 19: viertes Gerät von 10, Tankfüllungsmesser
- 20: erster elektrischer Schlüssel
- 21: Tastbildschirm von 20 bzw. 30
- 22: Anzeige-/Tastbetätigungsstelle, Modustaste
- 23: Anzeige-/Tastbetätigungsstelle, Funktionstaste
- 24: Anzeige-/Tastbetätigungsstelle, Funktionstaste
- 25: Ein-/Ausschalter an 20 bzw. 30
- 26: Druckbetätigung von 25
- 27: erstes Anzeige-Tastenfeld (Fig. 2)
- 28: zweites Anzeige-Tastenfeld (Fig. 2)
- 29: Tastbetätigungsstelle von 28 (Fig. 2)
- 30: elektronischer Schlüssel (Fig. 3)
- 31: erste Anzeige-/Tastbetätigungsstelle von 21 (Fig. 3)
- 32: zweite Anzeige-/Tastbetätigungsstelle von 21 (Fig. 3)
- 33: dritte Anzeige-/Tastbetätigungsstelle von 21 (Fig. 3)
- 34: numerisches Anzeigefeld bei 30
- 35: Uhrzeitanzeige bei 30

## Patentansprüche

1. Fernsteuerbare Schließvorrichtung für ein Fahrzeug (10) mit mindestens einem ortsfesten Schloss (11 bis 13) im Fahrzeug (10) und mit einem tragbaren elektronischen Schlüssel (20, 30) im Besitz einer berechtigten Person,
wobei der Schlüssel (20, 30) eine Anzeige für aktuelle Daten der Schließ- und Betriebszustände des Fahrzeugs (10) sowie eine Tastatur zum Abruf dieser Daten und zur Steuerung der künftigen Schließ- und/oder Betriebszustände im Fahrzeug (10) besitzt,
wobei sowohl das Display (22 bis 24) als auch die Tastatur (22 bis 24) am gleichen Ort im Schlüssel (20) lokalisiert sind und von einem Tastbildschirm (Touch Screen 21) gebildet werden, wobei die Schließvorrichtung so kofiguriert ist, dass
beim Start der Anzeige und/oder der Steuerung des Schlüssels (20 bis 30) auf dem Tastbildschirm (21) eine Codetastatur erscheint, mit welcher die berechtigte Person den für diesen Schlüssel (20, 30) und für das zugehörige Fahrzeug (1 0) spezifische PIN-Nummer einzugeben ist und dass der Schlüssel (20, 30) nur bei richtiger Eingabe der PIN-Nummer betriebsbereit wird bzw. betriebsbereit bleibt, wobei
im Ruhefall der Tastbildschirm (21) und die zugehörige Elektronik im Schlüssel abgeschaltet sind oder im Sparzustand ihrer Energieversorgung gehalten werden.

2. Vorrichtung nach Anspruch 1, **dadurch gekennzeichnet, dass** in Abhängigkeit von der jeweiligen Tastbetätigung und der Tastbetätigungsfolge des Bildschirms (21) die Betriebszustände einzelner Fahrzeugteile (11 bis 15) oder weiterer im Fahrzeug integrierter Geräte (16 bis 19) angezeigt und/oder gesteuert werden.

3. Vorrichtung nach Anspruch 1 oder 2, **dadurch gekennzeichnet, dass** außer den Schlössern (11 bis 13) an Türen oder Klappen im Fahrzeug auch eine Standheizung im Fahrzeug, die Klimaanlage im Fahrzeug, der Füllstand (18) im Tank des Fahrzeugs, der Ladezustand der Batterien (17), der aktuelle Kilometerstand (16), und/oder der mögliche Fahrweg, der bei der gegebenen Tankfüllung noch möglich ist, angezeigt werden und/oder steuerbar sind.

4. Vorrichtung nach einem der Ansprüche 1 bis 3, **dadurch gekennzeichnet, dass** Daten zur Navigation des aktuellen Standorts vom Fahrzeug, eine optische oder akustische Ortung des Fahrzeugs (1 0), die Temperatur im Fahrzeuginneren und/oder in der Umgebung, die Temperatur einzelner Geräte im Fahrzeug, die aktuelle Uhrzeit (35), und/oder das Datum der nächsten Inspektion des Fahrzeugs (1 0) auf dem Tastbildschirm (21) angezeigt werden.

5. Vorrichtung nach einem der Ansprüche 1 bis 4, **dadurch gekennzeichnet, dass** der Schlüssel (20, 30) Bestandteil eines Alarmsystems (18) vom Fahrzeug ist und als Alarmgeber beim Diebstahl des Fahrzeugs oder beim Einbruch in das Fahrzeug fungiert.

6. Vorrichtung nach einem der Ansprüche 1 bis 5, **dadurch gekennzeichnet, dass** der Schlüssel (20, 30) als Wecker für Staumeldungen im Verkehrsnetz und/oder sein Tastbildschirm zur Anzeige von Staumeldungen dient und dass diese Staumeldungen von einem im Fahrzeug befindlichen oder im Schlüssel (20, 30) integrierten Navigationssystem ausgehen, in welchem ein Fahrtziel einprogrammiert worden ist.

7. Vorrichtung nach Anspruch 1, **dadurch gekennzeichnet, dass** der Schlüssel (20, 30) bei seiner Inbetriebnahme sich automatisch einschaltet.

8. Vorrichtung nach Anspruch 1, **dadurch gekennzeichnet, dass** der Schlüssel durch Betätigen (26) eines am Schlüsselgehäuse befindlichen Schalters (25) manuell eingeschaltet wird.

9. Vorrichtung nach einem der Ansprüche 1 bis 8, **dadurch gekennzeichnet, dass** im Ruhefall des Schlüssels (20, 30) der Tastbildschirm (21) schauseitig abgedeckt ist.

10. Vorrichtung nach Anspruch 9, **dadurch gekennzeichnet, dass** die Abdeckung aus einer Drehklappe, einem Schiebedeckel oder einem Überzug besteht.

## Claims

1. A remote-control closing device for a vehicle (10) with at least one immovable lock (11 to 13) an the vehicle and with a portable electronic key (20, 30) in possession of an authorised person,
wherein the key (20, 30) comprises a display for current data of the closing and operating states of the vehicle (10) as well as a keypad for retrieving this data and for controlling the future closing and/or operating states in the vehicle (10),
wherein both the display (22 to 24) and the keypad (22 to 24) are arranged at the same location in the key (20) and are formed by a touchscreen (21), wherein the closing device is configured such that
when starting the display and/or controlling the key (20 to 30), a code keypad appears on the touchscreen (21) with which the authorised person has to enter the specific PIN number for this key (20, 30) and for the associated vehicle (10), and the key is or remains operable only if the PIN number entered is correct, wherein
in idling mode the touchscreen (21) and the associated electronics are switched off or are held in a power-saving state.

2. The device according to claim 1, **characterised in that** the operating states of individual vehicle parts (11 to 15) or further devices (16 to 19) integrated in the vehicle are displayed and/or controlled in dependence of the respective key-press and key press sequence of the screen (21).

3. The device according to claim 1 or 2, **characterised in that** apart from the locks (11 to 13) on doors or flaps in the vehicle, the auxiliary heating in the vehicle, the air-conditioning system in the vehicle, the filling level (18) in the vehicle tank, the charge state of the batteries (17), the current mileage (16) and/or the route possible for the amount of petrol in the tank, are also displayed and/or can be controlled.

4. The device according to one of claims 1 to 3, **characterised in that** data for navigating the current location of the vehicle, optical or acoustic tracking of the vehicle (10), the temperature inside the vehicle and/or in the vicinity, the temperature of individual devices in the vehicle, the current time of day (35) and/or the date of the next inspection of the vehicle (10) is displayed on the touchscreen (21).

5. The device according to one of claims 1 to 4, **characterised in that** the key (20, 30) is part of an alarm system (18) of the vehicle and functions as an alarm transmitter in case the vehicle is stolen or broken into.

6. The device according to one of claims 1 to 5, **characterised in that** the key (20, 30) serves as an alarm clock for road traffic alerts and/or its touchscreen serves to display traffic alerts and **in that** these traffic alerts are emitted by a navigation system present in the vehicle or integrated in the key (20, 30), wherein the navigation system has a destination of the trip programmed into it.

7. The device according to claim 1, **characterised in that** the key (20, 30) when being put into operation, switches on automatically.

8. The device according to claim 1, **characterised in that** the key is switched on manually by operating (26) a switch (25) provided on the key housing.

9. The device according to one of claims 1 to 8, **characterised in that** when the key (20, 30) is in idling mode the front of the touchscreen (21) is covered.

10. The device according to claim 9, **characterised in that** the cover consists of a rotary flap, a sliding cover or an overlay.

## Revendications

1. Dispositif de fermeture télécommandable pour un véhicule (10) avec au moins une serrure fixe (11 à 13) dans le véhicule (10) et avec une clé électronique portative (20, 30) dans la possession d'une personne autorisée,
pour lequel la clé (20, 30) possède un affichage pour les données actuelles des états de fermeture et de fonctionnement du véhicule (10) ainsi qu'un clavier pour appeler ces données et pour commander les états futurs de fermeture et de fonctionnement dans le véhicule (10),
pour lequel l'affichage (22 à 24) ainsi que le clavier (22 à 24) sont localisés au même endroit sur la clé (20) et sont constitués par un écran tactile (21), pour lequel le dispositif de fermeture est configuré de telle sorte
que lors du démarrage de l'affichage et/ou de la commande de la clé (20 à 30) un clavier de codage apparaît sur l'écran tactile (21) avec lequel la personne autorisée doit introduire le Code d'Identification Personnel (PIN) spécifique pour cette clé (20, 30) et pour le véhicule correspondant (10) et que la clé (20, 30) est prête à fonctionner ou reste prête à fonctionner uniquement avec une introduction exacte du Code d'Identification Personnel (PIN), pour lequel
à l'arrêt, l'écran tactile (21) et l'électronique correspondante dans la clé sont déconnectés ou sont maintenus à l'état économique de leur alimentation en énergie.

2. Dispositif selon la revendication 1, **caractérisé en ce que** les états de fonctionnement des parties de véhicule individuelles (11 à 15) ou d'autres appareils (16 à 19) intégrés dans le véhicule sont affichés et/ou commandés en fonction de la commande tactile respective et de la séquence de commande tactile de l'écran (21).

3. Dispositif selon la revendication 1 ou 2 **caractérisé en ce qu'**en-dehors des serrures (11 à 13) sur les portes ou volets dans le véhicule, il est également possible d'afficher et/ou de commander un chauffage stationnaire dans le véhicule, la climatisation dans le véhicule, l'état de remplissage (18) du réservoir du véhicule, l'état de charge des batteries (17), le kilométrage actuel (16) et/ou le parcours possible restant encore réalisable avec le remplissage du réservoir donné.

4. Dispositif selon l'une quelconque des revendications 1 à 3 **caractérisé en ce que** les données de navigation du lieu actuel du véhicule, une localisation optique ou acoustique du véhicule (10), la température à l'intérieur du véhicule et/ou dans les environs, la température des appareils individuels dans le véhicule, l'heure actuelle (35) et/ou la date de la prochaine inspection du véhicule (10) sont affichés sur l'écran tactile (21).

5. Dispositif selon l'une quelconque des revendications 1 à 4 **caractérisé en ce que** la clé (20, 30) fait partie intégrante d'un système d'alarme (18) du véhicule et fonctionne comme indicateur d'alarme en cas de vol du véhicule ou en cas d'effraction dans le véhicule.

6. Dispositif selon l'une quelconque des revendications 1 à 5 **caractérisé en ce que** la clé (20, 30) sert d'avertisseur pour les messages relatifs aux embouteillages dans le réseau de la circulation et/ou son écran tactile sert à afficher les messages relatifs aux embouteillages et **en ce que** ces messages relatifs aux embouteillages proviennent d' un système de navigation se trouvant dans le véhicule ou intégré dans la clé (20, 30), dans lequel une destination de trajet a été programmée.

7. Dispositif selon la revendication 1 **caractérisé en ce que** la clé (20, 30) se connecte automatiquement lors de sa mise en service.

8. Dispositif selon la revendication 1 **caractérisé en ce que** la clé est manuellement connectée en actionnant (26) un interrupteur (25) se trouvant sur le boîtier de clé.

9. Dispositif selon l'une quelconque des revendications 1 à 8 **caractérisé en ce qu'**à l'arrêt de la clé (20, 30), l'écran tactile (21) est couvert du côté présentation.

10. Dispositif selon la revendication 9 **caractérisé en ce que** la couverture est composée d'un volet rotatif, d'un couvercle coulissant ou d'un revêtement.
